(19) Europäisches Patentamt
European Patent Office
Office européen des brevets

(11) Veröffentlichungsnummer: **0 065 130**
**B1**

(12) **EUROPÄISCHE PATENTSCHRIFT**

(45) Veröffentlichungstag der Patentschrift: **18.07.84**

(51) Int. Cl.³: **C 09 B 35/362** // D06P1/06

(21) Anmeldenummer: **82103515.1**

(22) Anmeldetag: **26.04.82**

(54) **Trisazofarbstoffe.**

(30) Priorität: **08.05.81 DE 3118201**

(43) Veröffentlichungstag der Anmeldung:
**24.11.82 Patentblatt 82/47**

(45) Bekanntmachung des Hinweises auf die Patenterteilung:
**18.07.84 Patentblatt 84/29**

(84) Benannte Vertragsstaaten:
**CH DE FR GB IT LI**

(56) Entgegenhaltungen:
**FR - A - 2 200 258**
**FR - A - 2 274 661**

**CHEMICAL ABSTRACTS, Band 94, Nr. 14, April 1981, Seite 82, Nr. 104889d, Columbus, Ohio, USA**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Teitscheid, Josef, Oswald-Spengler-Strasse 72, D-5090 Leverkusen 3 (DE)**
Erfinder: **Gleinig, Harald, Dr., Eichholzer Weg 100, D-5068 Odenthal (DE)**
Erfinder: **Breig, Kurt, Dr., Leopold-Gmelin-Strasse 80, D-5000 Köln 80 (DE)**

**EP 0 065 130 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Gegenstand der vorliegenden Erfindung sind Trisazofarbstoffe der allgemeinen Formel

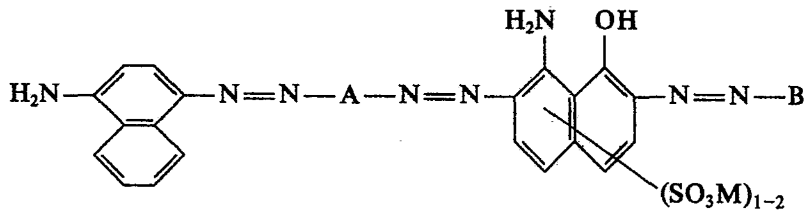

(1)

worin

A = gegebenenfalls substituierter Phenylenrest, insbesondere ein gegebenenfalls substituierter Phenylen-1,4-rest, und
B = gegebenenfalls durch Carboxyl- oder Sulfo-Gruppen, $C_1-C_4$-Alkyl-, $C_1-C_4$-Alkoxygruppen, Halogen, Acyl-, Trifluormethyl- oder Cyan-Gruppen substituierter Phenylrest
M = Wasserstoff oder Äquivalent eines Kations.

Geeignete Substituenten für A sind beispielsweise: Sulfo- oder Carbonsäure-Gruppen, $C_1-C_4$-Alkyl-, $C_1-C_4$-Alkoxy-Reste sowie Halogen.

In der obigen Formel bedeutet M Wasserstoff oder ein Äquivalent eines Kations, wobei als Kationen im allgemeinen solche in Betracht kommen, die zur Salzbildung bei anionischen Farbstoffen üblich sind. Als Kationen kommen vorzugsweise Alkalimetall- und Ammoniumkationen in Betracht, wobei als Alkalimetalle z. B. Lithium, Natrium und Kalium und als Ammoniumkatione das unsubstituierte Ammonium sowie Mono-, Di- und Trialkanolammonium, insbesondere Triethanol- und Triisopropanolammonium genannt werden können.

Bevorzugte Farbstoffe sind solche der Formel

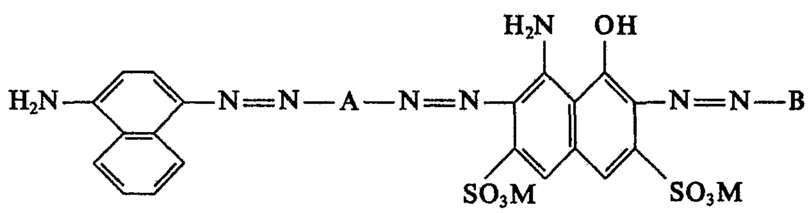

(2)

insbesondere der Farbstoff der Formel (2)

mit A = 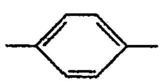 und B = 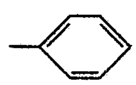

Daneben sind jedoch auch Gemische möglich, die zwei oder mehr Verbindungen der Formel 1 enthalten. Sie werden durch Einsatz eines entsprechenden Kupplungskomponentengemisches hergestellt.

Die neuen Farbstoffe erhält man beispielsweise durch saure Kupplung diazotierter Amine

$$O_2N-A-NH_2 \quad (3)$$

oder

$$CH_3CONH-A-NH_2$$

auf Aminonaphthole

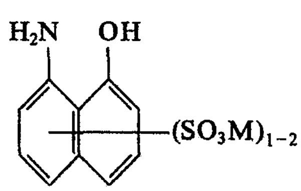

(4)

und nachfolgende alkalische Kupplung mit diazotierten Aminen

$$B-NH_2 \quad (5)$$

Reduktion der Nitrogruppe oder Verseifung der Acetylgruppe zur freien Aminogruppe, Diazotierung und Kupplung auf Naphthylamin-1 in wäßrigem oder wäßrig-organischem Medium vorzugsweise bei niedrigen, oder im Falle der Kupplungen auch gegebenenfalls bei höheren Temperaturen nach an sich bekannten Methoden in saurem, neutralem oder basischem pH-Bereich.

Geeignete Verbindungen (3) sind beispielsweise p-Nitranilin, 2-Chlor-4-nitranilin, 5-Nitro-2-aminotoluol, 5-Nitro-2-aminoanisol oder entsprechende p-Acetylaminoanilinverbindungen.

Geeignete Verbindungen (5) sind beispielsweise Anilin, o-, m- oder p-Toluidin, o- oder p-Anisidin, o-, m- oder p-Chloranilin, 2,4- oder 2,5-Dichloranilin, 4-Chlor-2-aminoanisol, 6-Chlor-2-aminotoluol, 5-Chlor-2-aminotoluol, 4-Chlor-2-aminotoluol, Anilin-o-, -m- oder p-sulfonsäure.

Geeignete Verbindungen (4) sind beispielsweise 1-Amino-8-naphthol-3,6-disulfosäure und 1-Amino-8-naphthol-4,6-disulfosäure.

Die Farbstoffe können durch übliche Methoden isoliert werden, beispielsweise durch Aussalzen und nachfolgendes Filtrieren oder auch durch Sprühtrocknung des Kupplungsansatzes ohne Zwischenisolierung des Farbstoffes. Die Farbstoffe können alleine oder auch im Gemisch mit anderen Farbstoffen für Färbungen eingesetzt werden.

Die neuen Farbstoffe finden Verwendung zum Färben von mit anionischen Farbstoffen anfärbbaren textilen oder nicht-textilen Substraten, wie natürlicher oder regenerierter Cellulose, natürlichem oder Synthetischem Polyamids, Polyurethan, insbesondere für Papier, Leder und Cellulose-Vliesstoffe. Man erhält dunkelblaue Färbungen mit guten Echtheiten.

Beispiel 1

13,8 Teile 4-Nitranilin werden mit Salzsäure und Natriumnitrit auf übliche Art diazotiert und mit 36,3 Teilen des Dinatriumsalzes von 1-Amino-8-naphthol-3,6-disulfosäure im pH-Bereich von 1 – 2,5 gekuppelt. Auf die so erhaltene Monoazoverbindung wird die in der Zwischenzeit hergestellte Diazolösung aus 9,3 Teilen Anilin bei einem pH-Wert von 9 – 10 zum Disazofarbstoff gekuppelt. Zur Reduktion der Nitrogruppe wird eine wäßrige Lösung, die 12,8 Teile Natriumsulfid enthält, bei etwa 40°C zum Reaktionsgemisch gegeben. Innerhalb von ca. 1 Stunde ist die Reduktion beendet. Die entstandene Amino-bis-azoverbindung wird mit 20% Natriumchlorid gefällt und isoliert. Die erhaltene Farbpaste wird mit verdünnter Salzsäure angerührt und mit einer Lösung von 7 Teilen Natriumnitrit in 50 Teilen Wasser diazotiert. Nach etwa 1stündigem Rühren wird der Überschuß an salpetriger Säure mit Amidosulfonsäure zerstört und eine wäßrige Suspension von 14,3 Teilen $\alpha$-Naphthylamin zugesetzt. Die Kupplung geht bei einem pH-Wert von 2 – 7 innerhalb ca. 1 Stunde zu Ende. Der erhaltene Farbstoff wird mit Natriumchlorid ausgefällt, isoliert und getrocknet. Er färbt Leder, Papier, natürliche oder synthetische Polyamide oder Baumwolle in blauschwarzen tiefen Tönen.

**Patentansprüche**

1. Trisazofarbstoffe der allgemeinen Formel

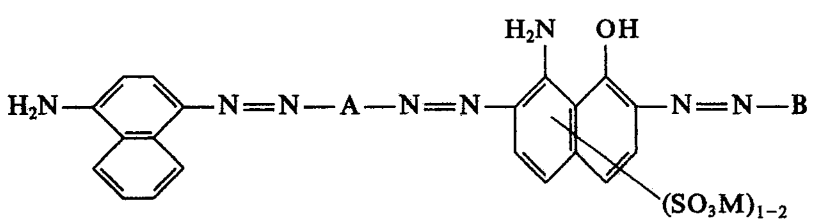

(1)

worin

A = gegebenenfalls substituierter Phenylenrest,
B = gegebenenfalls durch Carboxyl- oder Sulfo-Gruppen, $C_1-C_4$-Alkyl-, $C_1-C_4$-Alkoxy-Gruppen, Halogen, Acyl-, Trifluormethyl- oder Cyan-Gruppen substituierter Phenylrest,
M = Wasserstoff oder Äquivalent eines Kations.

2. Farbstoffe des Anspruchs 1 mit A = Phenylen-1,4.

3. Farbstoffe der Ansprüche 1 und 2 mit B = Phenyl.

4. Verwendung der Farbstoffe der Ansprüche 1 – 3 zum Färben von mit anionischen Farbstoffen anfärbbaren textilen oder nicht-textilen Substraten.

**Claims**

1.Trisazo dyestuffs of the general formula

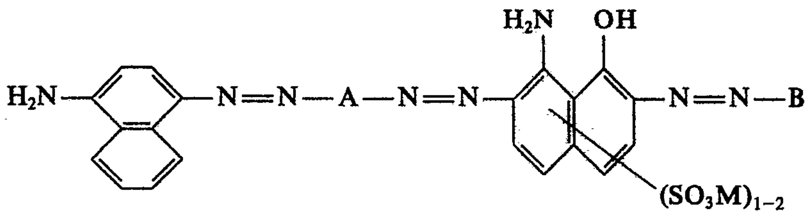

(1)

wherein

A = an optionally substituted phenylene radical,
B = a phenyl radical which may be substituted by carboxyl or sulpho groups, $C_1-C_4$-alkyl groups, $C_1-C_4$-alkoxy groups, halogen, acyl groups, trifluoromethyl groups or cyano groups,
M = hydrogen or one equivalent of a cation.

2. Dyestuffs according to Claim 1, in which A = 1,4-phenylene.
3. Dyestuffs according to Claims 1 and 2, in which B = phenyl.
4. Use of Dyestuffs according to Claims 1 – 3 for dyeing textile or non-textile substrates which can be dyed with anionic dyestuffs.

**Revendications**

1. Colorants trisazoïques de formule générale

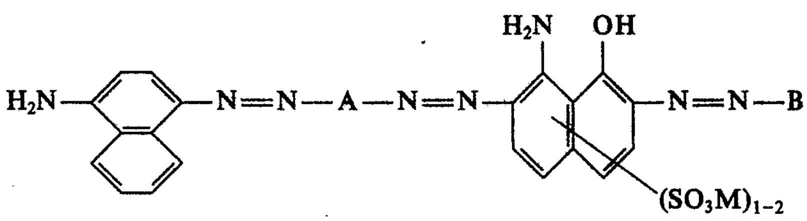

(1)

dans laquelle

A est un reste phénylène éventuellement substitué,
B est un reste phényle éventuellement substitué par des groupes carboxyles ou sulfo, des groupes alkyles en $C_1-C_4$, alcoxy en $C_1-C_4$, des atomes d'halogène, des groupes acyles, trifluorométhyles ou cyano,
M est l'hydrogène ou un équivalent d'un cation.

2. Colorants de la revendication 1, dans lesquels A est le reste phénylène-1,4.
3. Colorants des revendications 1 et 2 dans lesquels B est le reste phényle.
4. Utilisation des colorants des revendications 1 – 3 pour la teinture de substrats textiles ou non textiles pouvant être teints par des colorants anioniques.